# EUROPÄISCHE PATENTANMELDUNG

(11) **EP 1 460 117 A1**
(43) Veröffentlichungstag der Anmeldung: **22.09.2004**
(21) Anmeldenummer: 04001437.5
(22) Anmeldetag: 23.01.2004
(51) Int. Cl.: C09J 7/02, B65D 77/20, B32B 7/06, B32B 3/26, B32B 7/12

(54) **Siegelfähige Kunstofffolie für wiederverschliessbare Folienerzeugnisse und Verfahren zur Herstellung einer solchen Folie**

(30) Priorität: 20.03.2003 DE 10312395
(71) Anmelder: Nordenia Deutschland Gronau GmbH, 48599 Gronau (DE)
(72) Erfinder: Schwinn, Georg, 48599 Gronau (DE)
(74) Vertreter: Albrecht, Rainer Harald, Dr.-Ing.

(57) **Zusammenfassung**

Gegenstand der Erfindung ist eine siegelfähige Kunststofffolie für wiederverschließbare Folienerzeugnisse mit einem Träger (1) und einer Siegelschicht (2), die aus einem siegelfähigen Bindemittel (3) und in das Bindemittel eingebetteten Mikrokapseln (4) besteht. Die Mikrokapseln (4) enthalten einen Haftkleber (5), der nach Öffnen einer mit der Siegelschicht (2) gebildeten Siegelnaht infolge einer Zerstörung der Mikrokapseln (4) freiliegt und durch seine Permanentklebrigkeit einen Wiederverschluss ermöglicht.

## Beschreibung

Die Erfindung betrifft eine siegelfähige Kunststofffolie für wiederverschließbare Folienerzeugnisse. Folienerzeugnisse meint insbesondere Beutel für Verpackungszwecke, die durch heiß- oder kaltgesiegelte Nähte verschlossen sind. Nach erstmaligem Öffnen der Siegelnaht soll der Nutzer die Möglichkeit haben, den Beutel wieder zu verschließen, um den Verpackungsinhalt vor Umgebungseinflüssen, z. B. vor Austrocknen, Verunreinigung und dergleichen zu schützen.

Der Erfindung liegt die Aufgabe zugrunde, eine siegelfähige Kunststofffolie anzugeben, mit der Folienerzeugnisse hergestellt werden können, die wiederverschließbare Siegelnähte aufweisen.

Gegenstand der Erfindung und Lösung dieser Aufgabe ist eine Kunststofffolie mit einem Träger und einer Siegelschicht, die aus einem siegelfähigen Bindemittel und in das Bindemittel eingebetteten Mikrokapseln besteht, wobei die Mikrokapseln einen Haftkleber enthalten, der nach Öffnen einer mit der Siegelschicht gebildeten Siegelnaht infolge einer Zerstörung der Mikrokapseln freiliegt und durch seine Permanentklebrigkeit einen Wiederverschluss ermöglicht.

Das Bindemittel besteht aus einem Material, das gegen sich selbst, gegen andere Kunststoffe oder Nichtkunststoffe, z. B. Glas, Metall, Keramik und dergleichen siegelfähig ist. Als Bindemittel sind Heißsiegel-Klebstoffe oder Materialien, die sich zum Kaltsiegeln eignen, einsetzbar. Die erfindungsgemäß in das Bindemittel eingebetteten Mikrokapseln werden bereits bei dem unter Druck ausgeführten Siegelvorgang oder zumindest beim späteren Aufreißen der Siegelnaht zerstört und geben einen Haftkleber frei, der nach erstmaligen Öffnen der Siegelnaht durch seine Permanentklebrigkeit einen Wiederverschluss ermöglicht. Der in den Mikrokapseln enthaltene Haftkleber kann eingefärbt sein, so dass die wiederverschließbare Fläche optisch erkennbar ist.

Im Rahmen der Erfindung liegt es, dass der Träger nur in solchen Abschnitten, die nach Maßgabe des aus der Folie zu fertigenden Fertigerzeugnisses festgelegt sind, mit der erfindungsgemäßen Siegelschicht versehen ist.

Der Träger kann ein- oder mehrschichtig ausgebildet sein, wobei Polyolefine als Trägermaterial bevorzugt sind. Bei einem mehrschichtigen Trägeraufbau kann der Träger auch eine Barriereschicht, z. B. eine Sauerstoffquerschicht aus Ethylenvinylalkohol enthalten.

Gegenstand der Erfindung ist ferner ein Verfahren nach Anspruch 6 zur Herstellung der beschriebenen Kunststofffolie. Bevorzugte Ausgestaltungen des Verfahrens sind in den Ansprüchen 7 bis 11 angegeben und werden im Folgenden erläutert.

Für die Siegelschicht kann eine Mischung aus einem thermoplastischen Bindemittel und Mikrokapseln mit einem im Vergleich zum Bindemittel höheren Schmelzpunkt verwendet werden. Die Mischung lässt sich zusammen mit dem ebenfalls aus einem thermoplastischen Kunststoff bestehenden Träger durch Koextrusion verarbeiten. Ferner besteht die Möglichkeit, das Bindemittel durch Erhitzen der Mischung aufzuschmelzen und die Schmelze mit den darin eingebetteten Mikrokapseln auf eine vorgefertigte Trägerfolie aufzutragen.

Eine weitere Ausgestaltung des erfindungsgemäßen Verfahrens sieht vor, dass für die Siegelschicht ein die Mikrokapseln enthaltender Lack oder eine wässrige Dispersion verwendet wird. Der Lack oder die Dispersion können im Druckverfahren auf den Träger aufgebracht werden.

Bei den zuvor beschriebenen Ausgestaltungen des erfindungsgemäßen Verfahrens wird zunächst eine Mischung aus Bindemitteln und Mikrokapseln hergestellt, die anschließend durch Koextrusion, als schmelzeflüssige Substanz mit eingelagerten Inhaltsstoffen, als Lack oder Dispersion verarbeitet wird. Eine alternative, ebenfalls unter die erfindungemäße Lehre fallende Ausgestaltung des Verfahrens sieht vor, dass eine klebstoffbeschichtete Folienbahn als Träger verwendet wird und dass die Mikrokapseln als feinteilige Feststoffe auf die Klebstoffschicht des Tragers aufgebracht werden. Die klebstoffbeschichtete Folienbahn kann durch Koextrusion oder durch ein Beschichtungsverfahren hergestellt werden. Das Aufbringen der Mikrokapseln erfolgt in einem separaten Verfahrensschritt.

Im Folgenden wird die Erfindung anhand einer lediglich ein Ausführungsbeispiel darstellenden Zeichnung erläutert. Es zeigen schematisch:
- **Fig. 1**: einen Schnitt durch eine erfindungsgemäße, siegelfähige Kunststofffolie für wiederverschließbare Folienerzeugnisse,
- **Fig. 2**: eine weitere Ausgestaltung der Kunststofffolie, ebenfalls im Schnitt,
- **Fig. 3**: eine unter Verwendung der in Fig. 1 dargestellten Folie hergestellte Siegelnaht eines Folienerzeugnisses beim erstmaligen Öffnen der Siegelnaht.

Die in den Figuren dargestellten Kunststofffolien weisen einen Träger 1 und eine Siegelschicht 2 auf. Die Siegelschicht 2 besteht aus einem siegelfähigen Bindemittel 3 und in das Bindemittel 3 eingebetteten Mikrokapseln 4. Die Mikrokapseln 4 enthalten einen Haftkleber 5, der nach Öffnen einer mit der Siegelschicht 2 gebildeten Siegelnaht 6 infolge einer Zerstörung der Mikrokapseln 4 freiliegt und durch seine Permanentklebrigkeit einen Wiederverschluss ermöglicht.

Das Bindemittel 3 besteht aus einem Heißsiegelklebstoff oder einem für Kaltversiegelung geeigneten Material. Der in den Mikrokapseln 4 enthaltene Haftkleber 5 kann eingefärbt sein. Der Träger 1 ist einschichtig oder mehrschichtig ausgebildet und kann, wie in Fig. 2 dargestellt wird, eine Barriereschicht 7, z. B. in Form einer Sauerstoffsperrschicht enthalten. Vorzugsweise besteht der Träger aus Polyolefinen.

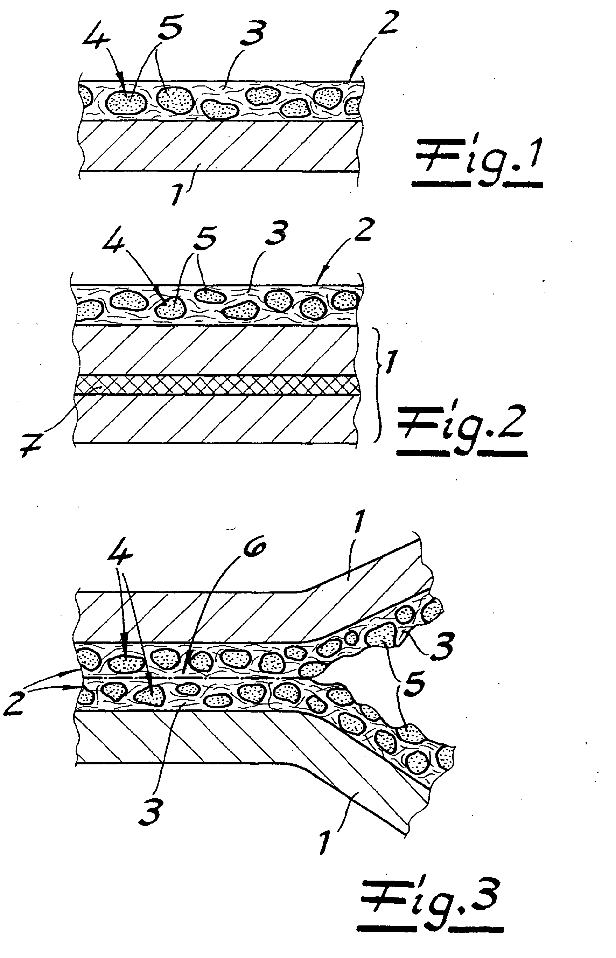

Die Mikrokapseln 4 werden bereits beim Heiß- oder Kaltversiegeln, zumindest aber beim Aufreißen der Siegelnaht 6, zerstört. Das Aufreißen der Siegelnaht 6 ist in Fig. 3 dargestellt. Der Figur entnimmt man, dass die Mikrokapseln 4 beim Aufreißen zerplatzen und den Haftkleber 5 freigeben, der anschließend durch seine Permanentklebrigkeit einen Wiederverschluss ermöglicht.

Die Siegelschicht 2 kann vollflächig auf den Träger 1 aufgebracht sein. Im Rahmen der Erfindung liegt es auch, dass der Träger 1 nur in vorgegebenen Abschnitten, die nach Maßgabe des aus der Folie zu fertigenden Fertigerzeugnisses festgelegt sind, mit der Siegelschicht 2 versehen ist.

## Patentansprüche

1. Siegelfähige Kunststofffolie für wiederverschließbare Folienerzeugnisse mit einem Träger (1) und einer Siegelschicht (2), die aus einem siegelfähigen Bindemittel (3) und in das Bindemittel (3) eingebetteten Mikrokapseln (4) besteht, wobei die Mikrokapseln (4) einen Haftkleber (5) enthalten, der nach Öffnen einer mit der Siegelschicht (2) gebildeten Siegelnaht (6) infolge einer Zerstörung der Mikrokapseln (4) freiliegt und durch seine Permanentklebrigkeit einen Wiederverschluss ermöglicht.

2. Kunststofffolie nach Anspruch 1, **dadurch gekennzeichnet, dass** das Bindemittel (3) aus einem für eine Kaltversiegelung geeigneten Material besteht.

3. Kunststofffolie nach Anspruch 1 oder 2, **dadurch gekennzeichnet, dass** der in den Mikrokapseln (4) enthaltene Haftkleber (5) eingefärbt ist.

4. Kunststofffolie nach einem der Ansprüche 1 bis 3, **dadurch gekennzeichnet, dass** der Träger (1) nur in vorgegebenen Abschnitten, die nach Maßgabe des aus der Folie zu fertigenden Fertigerzeugnisses festgelegt sind, mit der Siegelschicht (2) versehen ist.

5. Kunststofffolie nach einem der Ansprüche 1 bis 4, **dadurch gekennzeichnet, dass** der Träger (1) mehrschichtig ausgebildet ist und eine Barriereschicht (7) enthält.

6. Verfahren zur Herstellung einer siegelfähigen Kunststofffolie für wiederverschließbare Folienerzeugnisse nach einem der Ansprüche 1 bis 5, wobei auf einen Träger eine Siegelschicht aufgebracht wird, die aus einem siegelfähigen Bindemittel und in das Bindemittel eingebetteten, einen Haftkleber enthaltende Mikrokapseln besteht.

7. Verfahren nach Anspruch 6, **dadurch gekennzeichnet, dass** für die Siegelschicht eine Mischung aus einem thermoplastischen Bindemittel und Mikrokapseln mit einem im Vergleich zum Bindemittel höheren Schmelzpunkt verwendet wird und dass die Mischung zusammen mit dem ebenfalls aus einem thermoplastischen Kunststoff bestehenden Träger durch Koextrusion verarbeitet wird.

8. Verfahren nach Anspruch 6, **dadurch gekennzeichnet, dass** für die Siegelschicht eine Mischung aus einem thermoplastischen Bindemittel und Mikrokapseln mit einem im Vergleich zum Bindemittel höheren Schmelzpunkt verwendet wird, wobei das Bindemittel durch Erhitzen der Mischung aufgeschmolzen und die Schmelze mit den darin eingebetteten Mikrokapseln auf den Träger aufgetragen wird.

9. Verfahren nach Anspruch 6, **dadurch gekennzeichnet, dass** für die Siegelschicht ein die Mikrokapseln enthaltender Lack oder eine wässrige Dispersion verwendet wird.

10. Verfahren nach Anspruch 9, **dadurch gekennzeichnet, dass** der Lack oder die Dispersion im Druckverfahren auf den Träger aufgebracht wird.

11. Verfahren nach Anspruch 6, **dadurch gekennzeichnet, dass** eine klebstoffbeschichtete Folienbahn als Träger verwendet wird und dass die Mikrokapseln als feinteilige Feststoffe auf die Klebstoffschicht des Trägers aufgebracht werden.
